# EUROPEAN PATENT SPECIFICATION

(11) **EP 3 014 255 B1**
(45) Date of publication and mention of the grant of the patent: **05.01.2022**
(21) Application number: 14759255.4
(22) Date of filing: 27.06.2014
(51) Int. Cl.: G01N 25/72

(54) **MODULAR DEVICE FOR STRUCTURAL DIAGNOSTICS OF VARIOUS MATERIALS AND STRUCTURES, USING THERMOGRAPHIC TECHNIQUES BASED ON MULTIPLE EXCITATIONS**
MODULARE VORRICHTUNG ZUR STRUKTURANALYSE VERSCHIEDENER MATERIALIEN UND STRUKTUREN MITHILFE THERMOGRAFISCHER VERFAHREN AUF BASIS MEHRERER ANREGUNGEN
DISPOSITIF MODULAIRE POUR DES DIAGNOSTICS STRUCTURAUX DE MATÉRIAUX ET STRUCTURES DIVERS, UTILISANT DES TECHNIQUES THERMOGRAPHIQUES BASÉES SUR EXCITATIONS MULTIPLES

(30) Priority: 28.06.2013 IT RM20130381
(43) Date of publication of application: 04.05.2016
(73) Proprietor: Diagnostic Engineering Solutions S.r.l., 70125 Bari (IT)
(72) Inventor: GALIETTI, Umberto, I-70122 Bari (IT)
(74) Representative: De Tullio, Michele Elio
(86) International application number: PCT/IB2014/001227
(87) International publication number: WO 2014/207545

(56) References cited:
- EP-A2- 2 444 796
- WO-A2-2006/054962
- DE-A1- 19 838 858
- DE-B3-102010 005 042
- US-A1- 2008 049 808
- US-A1- 2010 019 153
- US-B1- 6 183 126
- DILLENZ A ET AL: "Progress in phase angle thermography", REVIEW OF SCIENTIFIC INSTRUMENTS, AIP, MELVILLE, NY, US, vol. 74, no. 1, January 2003 (2003-01), pages 417-419, XP012040262, ISSN: 0034-6748, DOI: 10.1063/1.1524010

## Description

The present Invention relates to a modular device for structural diagnostics of components and structures of different type, using thermographic techniques based on simultaneous excitations operated by different thermal sources.

More particularly it relates to a device for thermographic analysis with stimulated techniques, including multiple modules each providing a diagnosis by using a different technique.

The device is applied, in general, in the field of non-destructive testing (NDT) and, in particular, for the analysis and for the diagnostic of coatings and other details of components and big structures with specific regard to the fields of aviation industry, recreation industry, manufacturing and renewable energy.

As it is known, a technique to perform non-destructive and non-invasive diagnosis of a structure or a component thereof, is the thermographic technique.

This is a technique that involves the use of an infrared camera, otherwise called thermocamera, able of detecting the temperature of a body through the measurement of the intensity of the emitted heat, without coming into physical contact with it. There are different procedures for carrying out a thermographic analysis, which exploit the anomalies in the thermo physical behaviour of materials/components, for the detection, the evaluation and identification of defects in the same materials.

The thermographic analysis can be carried out using non-stimulated and stimulated techniques.

In the first case the surface is analyzed as it appears at the time of the test, without using external heat sources to heat or cool the component under examination.

In the stimulated conditions, however, the examined component is heated or cooled In order to activate the heat flows within the component, allowing to obtain different thermal responses from the elements present in the examined sample, characterized by different thermo-physical parameters.

These procedures involve the induction of a thermal transient in the structure to test, by means of the use of exciters, and the analysis, with different methodologies, of the surface temperature variations of the structure.

The presence of a defect causes a different temperature variation over time compared to areas without defects, thereby allowing the detection and measurement of the discontinuities.

Typically the induction of a thermal transient occurs with the use of hot air guns, optical exciters such as flash lamps or halogen lamps or by means of ultrasound. Each of these methodologies allows the analysis for a defined range of conditions, and therefore Is used for a limited number of applications.

Typically, the microwave excitation is just used to heat a microwave-sensitive film, that should be added to the component surface with the exclusive purpose to evaluate the intensity of the microwaves in certain areas and not for the detection of defects In materials.

The heating through optical systems typically causes a surface temperature variation and then a heat wave, single or modulated, which moves from the surface towards the interior; ultrasounds and especially microwaves instead generate heat in correspondence of a defect, and then a thermal flow that moves from the defect to the surface.

In particular, the microwaves allow a rapid evaluation of how deep Is the defect by means of the analysis of the thermographic signal over time through a dedicated procedure.

In the state of the art there are numerous patent documents relating to devices and systems for active tests using thermographic techniques, among which are cited the following:
- WO2006054962 titled "Systems and methods for inspecting coatings, surfaces and interfaces" filed on 12.11.2004 relating to a system for detecting defects in paint coatings Including a temperature manipulation apparatus configured to change the temperature of a surface and a coating applied to the surface; the system may further Include an Infrared sensor for measuring the variation of the temperature (over time) and a processor to compare the variation of the measured temperature of the surface and of the coating with respect to an expected change of temperature (over time) In order to determine anomalies in the coatings;
- US2010019153 entitled "Air-coupled acoustic thermography for in-situ evaluation" filed on 23.07.2008 which illustrates a thermographic device for acoustic testing of composite structures, comprising acoustic sources for excitation of the test sample and a vibration monitoring sensor, connected to a generator / controller of the feedback signal (16) to adjust the frequency, amplitude and / or phase of the signals applied to the acoustic sources;
- DE102010005042 titled "Infrared temperature device e.g. pyrometer, has image evaluation units attached to visible light camera, where image positions of measuring area markings in visible light image are assigned to image evaluation units" filed on 20.01.2010 which describes a thermographic inspection device comprising an infrared sensor and a laser pointer for projecting a marker on the test sample in order to identify the area to be tested; a camera detects the visible light images of the object to be examined, in a region of the visible spectrum, and the evaluation units of the images are attached to the camera to which are assigned the positions of the markers of the areas to be tested;
- US2008049808 titled "Method for appraising bodies" filed on 16.05.2007 which illustrates a method for the evaluation of a body at low heat conduction by means of detection of the temperature field of the body subject to subsequent simultaneous low-power energy stimulation on Its surface, and evaluation of the measured temperature range after said stimulation;
- US2006114965 titled "Thermal-based methods for nondestructive evaluation" filed on 21.09.2004 which illustrates a nondestructive method for determining the appropriateness of gluing a layer of a composite material during the production of the composite material comprising the following steps: heating of the layer, monitoring the temperature of the surface of the layer so as to obtain the instantaneous temperature values of the layer, using of the values obtained to verify the adequacy of gluing of the layer;
- EP2444796 titled "Thermography based system and method for detecting counterfeit drugs" relates to a thermography IR system for determining the authenticity of a pharmaceutical product, the system comprises: (a) a thermography IR apparatus for: (a,1) acquiring at predefined controlled conditions an authenticity signature of an authentic pharmaceutical product, by means of at least one thermography image describing the distribution over said product of the IR radiation In an MWIR or LWIR spectrum as a function of temperature and emissivity; (a.2) storing said acquired authenticity signature in a memory; and (a.3) for a tested pharmaceutical product that corresponds to said authentic product, and whose authenticity is suspected, acquiring at same predefined controlled conditions a test signature by means of at least one thermography image of said tested product describing the distribution over said test product of the IR radiation in a MWIR or LWIR spectrum as a function of temperature and emissivity; and (b) a comparison unit for comparing between said authenticity signature and said test signature,

The systems described In the prior art listed above present, however, some problems to be solved, among which the following are mentioned:
- they do not allow an effective control of the thermal excitation sent to the sample to be tested because of the different setting procedures of excitation sources,
- they do not allow an effective feedback between the excitation phase and the heating and post excitation phase,
- some systems are not equipped with an effective method for selecting the region of the sample to be tested,
- they do not allow to detect very rapidly defects, also of big dimensions,
- they take a long time to complete the structural diagnosis of the entire sample to be tested.

The purpose of the present invention is to provide a single device capable of solving the above drawbacks.

For this purpose the device according to the present invention is based on a group for the thermal excitation of materials, particularly composite materials, Including multiple modules, each providing a diagnosis using a different technique.

Another purpose of the present invention is to allow the comparison of the data obtained by means of said exciter group with the differential analysis of the heating phase and the post-excitation phase for the evaluation of the presence of the defect and its depth.

In particular, the whole characterization of the defect is made via a software which provides algorithms of statistical type.

The presence and the size of the defect are determined by a statistical analysis of the thermal response of the material.

A defect, in fact, presents a heating / cooling diagram less linear compared to an area without defects.

For this reason, from the analysis of the slope and of the linearity (correlation coefficient) of the diagram and of the other statistical measures, it is possible to identify and evaluate the size of the defect.

A further purpose is to avoid using more diagnostic devices each of them requiring a different setting and providing a single modular device whose setup requires only one procedure,

Another purpose is to reduce the time needed to complete the structural diagnosis.

Finally, a purpose of the present Invention, is improving the POD (Probability of Detection) through the analysis and the comparison of data obtained with the use of different procedures for thermographic diagnosis each of which uses a different heat source, compensating, in this way, the deficiencies of traditional techniques provided with a single thermal source which Is not able to diagnose the wide range of defects existent in several types of materials.

The present invention, therefore, has the advantage to allow a "multispectral" diagnosis of the structure or of the component to be tested, using a group of thermal exciters employing different procedures of data analysis, over time or in frequency, deriving from sequences of thermograms,

A further advantage of the invention is to provide a complementary analysis of the different Information resulting from the use of more heat sources in order to characterize in detail the possible damage or defect in a wide range of materials and, consequently, increase the probability of detection of defects (POD).

The device object of the present invention, therefore, allows the simultaneous excitation carried out by multiple heat sources controlled by means of dedicated sensors and by virtue of eventual feedback loops.

For the analysis of the collected data, the device employs filters in the frequency spectrum and thermographic signal reconstruction algorithms In order to distinguish the information obtained from the different applied sources.

These dedicated algorithms, allow the synergistic analysis of the data obtained using the multiple thermal excitation sources.

The modularity of the device and its flexibility, as said above, allow to perform diagnosis while reducing the time of set-up and, consequently, of the test as well.

In particular, the device object of the present Invention allows the on-site monitoring of big structures drastically reducing the time of maintenance of said structures.

In addition, the device allows the calibrated positioning, by means of laser pointers, of the tested area, identifying both the test and the excitation area, In order to accurately reconstruct the entire test area and allow a precise location of the defective areas.

The invention aims at integrating the traditional thermal excitation techniques with a modular device that allows to expand the types of defects detectable by means of diagnostic structural tests based on simultaneous excitations operated by different thermal sources.

In particular, the integration of a microwave exciter with the diagnosis group, allows to detect very quickly even small defects or metallic inclusions in composite materials, which otherwise are difficult to locate with the known devices.

The integration of a laser exciter also enables the diagnosis of coated complex shape components In a short time, as well as the advantage of being able to analyze components at a great distance which are normally difficult to reach by an operator except by means of mobile platforms or appropriate structures.

The present invention is aimed, therefore, at providing a suitable device to expand the diagnostic capabilities of the known non-destructive testing devices, with the added advantage of being able to diagnose large areas of a component while reducing the test times.

These and other purposes, as further explained in the following description, are achieved by the modular device for structural diagnosis of materials and different structures, using thermographic techniques based on multiple excitations, according to the present Invention which is described below In a preferred embodiment which does not limit further developments under the invention, with the help of the accompanying drawings which illustrate the following figures:
figure 1 - a schematic view of the whole modular device;
figure 2 - a block diagram of the control system of the multiple sources,

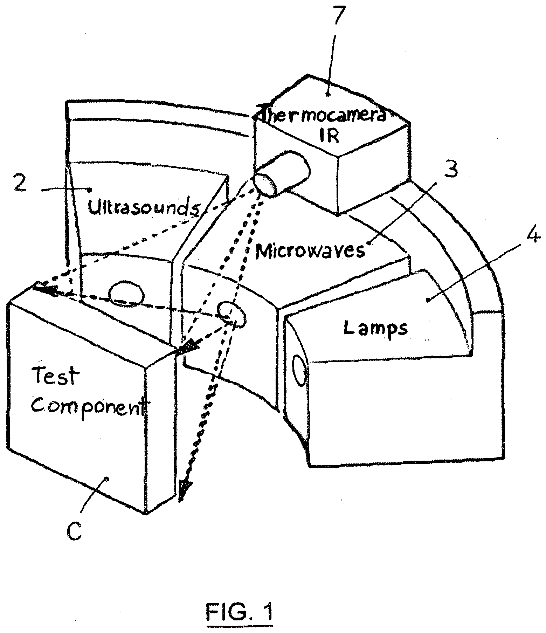

As shown in figure 1, the device according to the present invention, Includes multiple integrated modules 2, 3 and 4, each suitable to excite in a different manner, the material C to be tested, in a specific range of the electromagnetic spectrum or by mechanical methods.

The excitement produced heats the material C by generating, more precisely, a thermal transient, within the tested area.

Defects or damaged areas represent thermal barriers or obstacles to the normal thermal propagation of heat within the test sample or become themselves sources of heat.

The areas with defects, therefore, will be heat-affected in comparison with undamaged areas of the tested component.

These non-homogeneities of thermal behaviour on the tested surface are detected by an IR (infra-red) camera 7 in different spectral bands used by them such as, for example, in the range of near (0,9 - 1,7 µm), medium (3 - 5 µm) or far (8 - 14 µm) infrared.

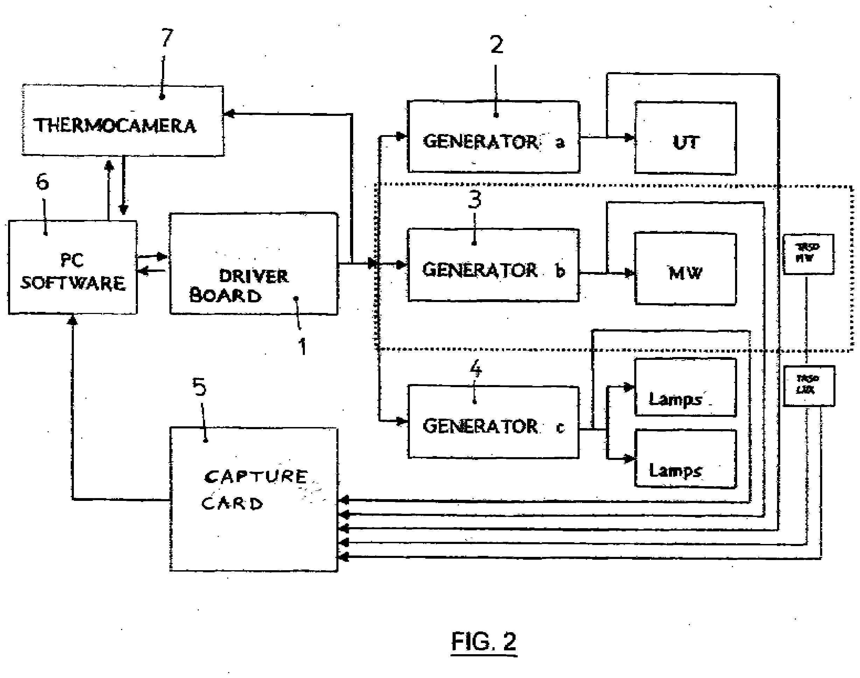

As said above, the multiple sources of thermal excitation, as shown in figure 2, are managed by a control system comprising multiple components.

The first component consists of a driver board 1 which controls three or more thermal exciters activated via controls ON / OFF and / or sine and square waves,

In a preferred embodiment, said exciters are of three types: an ultrasound generator 2, a microwave generator 3 and a signal generator 4 for the control of the optical devices (halogen lamps, flash lamps or laser sources).

The thermal excitation is produced for example by:
- ultrasound transducers (frequencies from 10 to 50 KHz), as in the case of generator 2,
- a microwave generator with Horn antenna with frequencies from 2-35 GHz to 2.55 GHz or from 4.85 GHz to 4.95 GHz and gain 18dB ± 1dB, as in the case of generator 3, and
- optical drivers such as flash lamps, halogen lamps or laser sources, as In the case of generator 4.

The control system also includes a capture card 5 which detects the signals generated downstream from the generators, checking the emission levels of the produced waves in order to ensure safe operation, and performs an eventual feedback of the provided commands.

Then there is a PC 6, equipped with suitable software, which manages these thermal excitation sources 2, 3 and 4 (PC interface - driver board) and a IR thermocamera 7 (PC interface - thermocamera), synchronizing the excitation control with the acquisition of the infrared signal, and analyzing the data collected from the capture card 5.

The IR thermocamera 7, managed by the driver board for synchronizing generators 2, 3 and 4, communicates with a PC via the data management and analysis software, Finally sensors located downstream of the exciting sources, allow, by means of a feedback loop, the control of the emission levels of different types of used waves.

In particular, the microwave excitation system 3 is constituted by the following components:
- a magnetron microwave generator at 2.45 GHz and up to 6kW, or alternatively a microwave generator around 2450 or 4900MHz, whose oscillator is coupled, with a PLL system, to a compensated quartz reference against temperature variations so as to ensure a high stability of the output frequency;
- a suitable power amplifier, up to 6kW for "magnetron" systems and up to 2kW for PLL systems, in which the use of solid state technology allows a very accurate construction and requires a low voltage power supply (obtained by switching converters with high efficiency of the electric supply); It Incorporates, the circuitry for adjusting the power level and a system of protection against the reflected signals, ensuring the correct functioning of the exciter 3, even in case of incorrect positioning of the antenna or of radiation of metal surfaces with a high coefficient of reflection;
- an electronic control card that oversees the functioning of the entire transmitter (generator + amplifier) protecting, in particular, the more delicate devices from malfunction (missing or insufficient ventilation, excessive current absorption, high voltages) and which allows, furthermore, the adjustment of the output level of power and telemetry and remote control via IT protocol.

Furthermore, on a graphic display, there is also the visualization of all the operating parameters such as: output power, reflected power, temperature of the cooling fin, power supply voltage and current absorbed by the transistor.

The modular device, according to the present invention, also provides the use of laser pointers at least one of which is associated with the microwave generator 3 and to the laser source for the identification of the irradiated area, and at least one, associated with the thermocamera 7, for the Identification of the measurement area; this allows to have a combined action of the thermal sources, and to solve the problem of analyzing very large areas of the component that may be distant from the generator sources.

Using microwave at a frequency from 2.45 GHz up to 4.90 GHz, i.e. the frequency of excitation of water molecules, the device allows to diagnose the defects of a composite material by means of an infrared thermocamera capable of picking up the differences of surface temperatures generated by the heating of water trapped also In small defects.

In fact, in the case of composite materials, i.e. materials notoriously hygroscopic, the steam pressure of trapped water is sufficient to create an accumulation of water in the defect.

Such small defects are often unacceptable, as in the case of aircrafts, since they may cause the break of the component in flight, but also in external components, such as wind turbine blades, subject to considerable stresses and to eventual freeze-thaw in the damaged area.

## Claims

1. Modular device for structural diagnostics of various materials and structures, using thermographic techniques based on multiple excitations including:
- a group of thermal excitation (2, 3, 4), operated by a driver board (1), analogue or digital,
- a radiometric thermal camera (7), with recording capacity of sequences in time,
- a capture card (5), connected with said driver board (1) via software (6), for acquisition of the downstream signals produced by the group of thermal excitation (2, 3, 4) and checking of the emission levels of the produced waves,
- at least one computer and related software for the management and control of the apparatus and for the acquisition of the signal and analysis of data, feedback sensors to allow the control of the emission levels of the waves produced by the thermal group of excitation,
- two or more laser pointers , **characterized in that** said group of thermal excitation (2, 3, 4) is operated through ON / OFF commands and/or square and sine waves and is composed of an ultrasound generator (2), a microwave generator (3) and an optical generator (4), adapted to work simultaneously and at least one laser pointer is associated to the microwave generator (3) and the optical generator (4) and at least one is associated to the thermal camera (7) for the identification of the measurement area.

2. Modular device according to claim 1 **characterized in that** the thermal excitation is generated simultaneously by:
- an ultrasonic generator (2) provided with transducers for the production of ultrasound frequencies from 10 to 50 KHz,
- a microwave generator (3) provided with a Horn antenna for projecting a beam of microwaves with frequencies from 2.35 GHz to 2.55 GHz or from 4.85 GHz to 4.95 GHz and gain 1 8dB ± 1dB,
- an optical generator (4) provided with a flash lamp or halogen lamp or a laser source.

3. Modular device according to the previous claims **characterized in that** the microwave generator (3) comprises:
- a generator, of magnetron type, at 2.45 GHz and up to 6kW or alternatively a microwave generator around 2450 or 4900 MHz, whose fundamental oscillator is coupled with a PLL system to a compensated quartz reference,
- a power amplifier, suitable to the test, up to 6kW, for magnetron systems, and up to 2kW, for systems in PLL,
- a control board for supervising the functioning of the entire transmitter (generator + amplifier), the adjustment of the level of output power, the telemetry and the remote control through a computer protocol.

4. Modular device according to the previous claims **characterized in that** the different thermal sources of the excitation group are adapted to be controlled by dedicated sensors and feedback loops and to realize a multispectral diagnosis of the structure or component by means of procedures of data analysis, in time or in frequency, generated from sequences of thermograms.

5. Modular device according to the previous claims **characterized in that**, for the analysis of the collected data, the computer and related software for the management and control of the modular device use algorithms based on the statistical analysis of the thermal response of the material - correlation coefficient and/or slope of the curve of the thermal response - filters in frequency spectrum and algorithms of reconstruction of the thermographic signal, which allow the synergic analysis of the obtained data using the different sources of thermal excitation.

## Patentansprüche

1. Modulare Vorrichtung zur Strukturdiagnose verschiedener Materialien und Strukturen mithilfe thermografischer Verfahren auf der Basis von Mehrfachanregung, umfassend:
- eine Einheit für die thermische Anregung (2, 3, 4), die von einer analogen oder digitalen Treiberplatine (1) betätigt wird,
- eine radiometrische Wärmekamera (7), die zeitliche Abfolgen aufzeichnen kann,
- eine Aufzeichnungskarte (5), die mit der Treiberplatine (1) über Software (6) verbunden ist, für die Erfassung der Downstream-Signale, die von der Einheit für die thermische Anregung (2, 3, 4) erzeugt werden, und für die Prüfung der Emissionsgrade der erzeugten Wellen,
- mindestens einen Computer und zugehörige Software für die Steuerung und Kontrolle der Vorrichtung und für die Signalerfassung und die Datenanalyse,
- Rückmeldesensoren, um die Steuerung der Emissionsgrade der Wellen zu ermöglichen, die von der thermischen Anregungseinheit erzeugt werden,
- zwei oder mehr Laserpointer,
**dadurch gekennzeichnet, dass** die Einheit für die thermische Anregung (2, 3, 4) mithilfe von EIN-/AUS-Befehlen und/oder Rechteck- und Sinuswellen betätigt wird und aus einem Ultraschallgenerator (2), einem Mikrowellengenerator (3) und einem optischen Generator (4) besteht, die dazu geeignet sind, simultan zu arbeiten, und mindestens ein Laserpointer mit dem Mikrowellengenerator (3) und dem optischen Generator (4) verbunden ist und mindestens einer mit der Wärmekamera (7) zur Identifizierung des Messbereichs verbunden ist.

2. Modulare Vorrichtung nach Anspruch 1, **dadurch gekennzeichnet, dass** die thermische Anregung simultan hervorgerufen wird durch:
- einen Ultraschallgenerator (2), der mit Wandlern für die Erzeugung von Ultraschallfrequenzen von 10 bis 50 kHz versehen ist,
- einen Mikrowellengenerator (3), der mit einem Hornstrahler zum Abstrahlen eines Mikrowellenstrahls mit Frequenzen von 2,35 GHz bis 2,55 GHz oder von 4,85 GHz bis 4,95 GHz und einer Verstärkung von 18dB ± 1dB versehen ist,
- einen optischen Generator (4), der mit einer Blitzlampe oder einer Halogenlampe oder einer Laserquelle versehen ist.

3. Modulare Vorrichtung nach den vorherigen Ansprüchen, **dadurch gekennzeichnet, dass** der Mikrowellengenerator (3) umfasst:
- einen Generator, vom Typ Magnetron, mit 2,45 GHz und bis zu 6kW oder alternativ einen Mikrowellengenerator um 2450 oder 4900 MHz, dessen Grundfrequenzoszillator mit einem Phasenregelschleifensystem mit einer kompensierten Quartzreferenz gekoppelt ist,
- einen Leistungsverstärker, geeignet für die Prüfung, bis 6kW, für Magnetronsysteme, und bis 2kW, für Systeme in Phasenregelschleife,
- eine Steuerplatine für die Überwachung der Funktionsweise des gesamten Messumformers (Generator + Verstärker), die Einstellung des Pegels der Ausgangsleistung, die Telemetrie und die Fernsteuerung mithilfe eines Computerprotokolls.

4. Modulare Vorrichtung nach den vorherigen Ansprüchen, **dadurch gekennzeichnet, dass** die verschiedenen Wärmequellen der Anregungseinheit dazu geeignet sind, durch zweckbestimmte Sensoren und Rückkopplungsschleifen geregelt zu werden und eine multispektrale Diagnose der Struktur oder Komponente mithilfe von Verfahren zur Datenanalyse, in Zeit oder Frequenz, durchzuführen, erzeugt aus Sequenzen von Thermogrammen.

5. Modulare Vorrichtung nach den vorherigen Ansprüchen, **dadurch gekennzeichnet, dass** der Computer und die zugehörige Software für die Steuerung und Kontrolle der modularen Vorrichtung zur Analyse der gesammelten Daten Algorithmen, die auf der statistischen Analyse der thermischen Reaktion des Materials - Korrelationskoeffizient und/oder Steigung der Kurve der thermischen Reaktion - basieren, Filter im Frequenzspektrum und Algorithmen zur Rekonstruktion des thermografischen Signals verwenden, die die synergische Analyse der erhaltenen Daten unter Verwendung unterschiedlicher thermischer Anregungsquellen ermöglichen.

## Revendications

1. Dispositif modulaire pour le diagnostic structurel de divers matériaux et structures, en utilisant des techniques thermographiques basées sur de multiples excitations incluant :
- un groupe d'excitation thermique (2, 3, 4), exploité par une carte de pilotage (1), analogique ou numérique,
- une caméra thermique radiométrique (7), avec capacité d'enregistrement de séquences dans le temps,
- une carte d'acquisition (5), connectée à ladite carte de pilotage (1) par l'intermédiaire d'un logiciel (6), pour l'acquisition des signaux en aval produits par le groupe d'excitation thermique (2, 3, 4) et la vérification des niveaux d'émission des ondes produites,
- au moins un ordinateur et le logiciel connexe pour la gestion et la commande de l'appareil et pour l'acquisition du signal et l'analyse de données,
- des capteurs de rétroaction pour permettre la commande des niveaux d'émission des ondes produites par le groupe thermique d'excitation,
- deux pointeurs laser ou plus,
**caractérisé en ce que** ledit groupe d'excitation thermique (2, 3, 4) est exploité par l'intermédiaire d'instructions MARCHE/ARRÊT et/ou d'ondes carrées et sinusoïdales et est composé d'un générateur d'ultrasons (2), d'un générateur de micro-ondes (3) et d'un générateur optique (4), conçus pour fonctionner simultanément et au moins un pointeur laser est associé au générateur de micro-ondes (3) et au générateur optique (4) et au moins un est associé à la caméra thermique (7) pour l'identification de la zone de mesure.

2. Dispositif modulaire selon la revendication 1 **caractérisé en ce que** l'excitation thermique est générée simultanément par :
- un générateur ultrasonique (2) pourvu de transducteurs pour la production de fréquences ultrasonores allant de 10 à 50 kHz,
- un générateur de micro-ondes (3) pourvu d'une antenne cornet pour projeter un faisceau de micro-ondes avec des fréquences allant de 2,35 GHz à 2,55 GHz ou de 4,85 GHz à 4,95 GHz et un gain de 18 dB ± 1 dB,
- un générateur optique (4) pourvu d'une lampe flash ou lampe halogène ou d'une source laser.

3. Dispositif modulaire selon les revendications précédentes **caractérisé en ce que** le générateur de micro-ondes (3) comprend :
- un générateur, de type magnétron, à 2,45 GHz et jusqu'à 6 kW ou, selon une autre possibilité un générateur de micro-ondes autour de 2450 ou 4900 MHz, dont l'oscillateur fondamental est couplé avec un système PLL à une référence quartz compensée,
- un amplificateur de puissance, approprié pour le test, jusqu'à 6 kW, pour des systèmes de magnétron, et jusqu'à 2 kW, pour des systèmes en PLL,
- une carte de commande pour superviser le fonctionnement de l'émetteur entier (générateur + amplificateur), l'ajustement du niveau de puissance de sortie, la télémétrie et la commande à distance par l'intermédiaire d'un protocole informatique.

4. Dispositif modulaire selon les revendications précédentes **caractérisé en ce que** les différentes sources thermiques du groupe d'excitation sont conçues pour être commandées par des capteurs dédiés et des boucles de rétroaction et pour réaliser un diagnostic multispectral de la structure ou du composant au moyen de procédures d'analyse de données, en temps ou en fréquence, générées à partir de séquences de thermogrammes.

5. Dispositif modulaire selon les revendications précédentes **caractérisé en ce que**, pour l'analyse des données recueillies, l'ordinateur et le logiciel connexe pour la gestion et la commande du dispositif modulaire utilisent des algorithmes basés sur l'analyse statistique de la réponse thermique du matériau - coefficient de corrélation et/ou pente de la courbe de la réponse thermique - des filtres dans le spectre de fréquences et des algorithmes de reconstruction du signal thermographique, qui permettent l'analyse synergique des données obtenues en utilisant les différentes sources d'excitation thermique.
